# EUROPÄISCHE PATENTSCHRIFT

(11) **EP 1 077 225 B1**
(45) Veröffentlichungstag und Bekanntmachung des Hinweises auf die Patenterteilung: **16.04.2003**
(21) Anmeldenummer: 00113996.3
(22) Anmeldetag: 01.07.2000
(51) Int. Cl.: C08G 18/48, C08K 7/14, C08J 5/12

(54) **Verbundelemente**
Composite elements
Eléments en matériau composite

(30) Priorität: 18.08.1999 DE 19939111
(43) Veröffentlichungstag der Anmeldung: 21.02.2001
(73) Patentinhaber: BASF AKTIENGESELLSCHAFT, 67056 Ludwigshafen (DE)
(72) Erfinder: Menne, Karl-Friedrich, 49448 Lemfoerde (DE); Partusch, Georg, 86932 Pürgen (DE); V. Wantoch, Harald, 82140 Olching (DE); Pöltl, Jörg, 85221 Dachau (DE)

(56) Entgegenhaltungen:
- US-A- 4 194 940
- US-A- 4 381 352
- PATENT ABSTRACTS OF JAPAN vol. 018, no. 456 (C-1242), 25. August 1994 (1994-08-25) & JP 06 144889 A (SANYO CHEM IND LTD), 24. Mai 1994 (1994-05-24)

## Beschreibung

Die Erfindung betrifft Verbundelemente enthaltend
i) thermoplastische Folie, an die sich haftend
ii) das Produkt der Umsetzung einer Reaktionsmischung enthaltend
   a) Isocyanat,
   b) Polyetherpolyalkohol mit'einer Funktionalität von 1,9 bis 8,0, einer Hydroxylzahl von 250 bis 1800 mg KOH/g sowie 10,0 bis 100% primären Hydroxylgruppen,
   c) mindestens eine organische und/oder anorganische Säure,
   d) Fasern,
   e) Katalysatoren und gegebenenfalls
   f) Treibmittel und/oder
   g) Hilfs- und/oder Zusatzstoffe
   anschließt.

Des weiteren bezieht sich die Erfindung auf Verfahren zur Herstellung derartiger Verbundelemente und deren Verwendung.

Polyisocyanat-Polyadditionsprodukte erhältlich durch Umsetzung von Isocyanaten mit gegenüber Isocyanaten reaktiven Verbindungen sowie Verbundelemente von diesen Produkten mit beispielsweise thermoplastischen Folien sind allgemein bekannt. Eine Belastung dieser Verbundelemente durch hohe Temperaturen und Luftfeuchtigkeiten führt häufig zu einer unerwünschten Ablösung der thermoplastischen Folie von den Polyisocyanat-Polyadditionsprodukten. Insbesondere beim Einsatz solcher Verbundelemente im Automobilbau, beispielsweise als Karosserieteile, für die eine solche Belastung nicht ausgeschlossen werden kann, ist eine Ablösung der thermoplastischen Folie und damit eine Zerstörung des Verbundelementes nicht akzeptabel.

Im Weiteren ist die Entformzeit eines solchen Bauteils von großer Wichtigkeit. Die Entformzeit ist die Zeit die das Reaktionsgemisch aus Polyisocyant und Polyadditionsprodukten benötigt um in der Reaktionsform einen ausreichend hohen Vernetzungsgrad zu erreichen. Der Vernetzungsgrad, der durch die Ausgangsstoffe bedingt wird, ist im allgemeinen ausreichend, wenn die Polyurethanoberfläche die der Werkzeugoberfläche entspricht. Werden Fasern zusammen mit weiteren Ausgangsstoffen als Gemisch zum Polyurethan verarbeitet, ist eine entsprechend lange Startzeit nötig, wobei die Startzeit der Beginn des Aufschäumens des Produktes aus der Reaktion zwischen Isocyanat, Polyetherpolyalkohol und Wasser ist.

Aufgabe der Erfindung war es somit, Verbundelemente zu entwikkeln, die aufgrund ihrer hervorragenden mechanischen Eigenschaften beispielsweise als Karosserieteile eingesetzt werden können und bei denen die Haftung zwischen der thermoplastischen Folie und den daran haftenden Polyisocyanat-Polyadditionsprodukten auch bei einer Lagerung für 2 Stunden bei 90°C und 0,8 bar gesättigtem Wasserdampf sowie anschließend 2 Stunden bei 105°C und ca. 60 % rel. Luftfeuchtigkeit nicht verlorengeht. Des weiteren sollten die Ausgangsstoffe derart optimiert werden, daß bei einer verbesserten Reaktionskinetik bei der Herstellung der Verbundelemente auch der Einsatz von Fasern möglich ist, insbesondere sollten kurze Entformzeiten der Bauteile und eine ausreichend lange Startzeit erreicht werden, womit eine wirtschaftliche Herstellung der Bauteile in hoher Stückzahl (> 80 000 Stück/Jahr) möglich gemacht werden soll.

Die Aufgabe konnte durch die eingangs beschriebenen Verbundelemente gelöst werden.

Die erfindungsgemäßen Reaktionsmischungen enthaltend (a), (b), (c), (d), (e) und gegebenenfalls (f) und (g) bewirkt nicht nur eine verbesserte Haftung zwischen (i) und (ii), sondern lassen auch eine ausreichend lange Startzeit zu, um die Fasern (d) verarbeiten zu können. Zudem konnten die Entformzeiten gewünscht kurz gehalten werden.

Als thermoplastische Folie (i) können allgemein bekannte Folien eingesetzt werden, beispielsweise übliche Folien auf der Basis von Acrylnitril-Butadien-Styrol (ABS), Polymethylmethacrylat (PMMA), Acrylnitril-Styrol-Acrylester (ASA), Polycarbonat (PC), thermoplastischem Polyurethan, Polypropylen, Polyethylen, und/oder Polyvinylchlorid (PVC).

Derartige Folien sind kommerziell erhältlich und ihre Herstellung ist allgemein bekannt. Die Folien weisen bevorzugt eine Dicke von 1,0 bis 1,5 mm auf. Bevorzugt werden als thermoplastische Folie (i) eine mindestens zwei Schichten enthaltene Folie eingesetzt, wobei die eine Schicht einen ASA und/oder Polycarbonat-Werkstoff enthält. Besonders bevorzugt verwendet man eine Zweischichtfolie, wobei die erste Schicht auf PMMA basiert und die zweite Schicht auf ASA und/oder PC. Setzt man Zweischichtfolie ein, so haftet das Polyisocyanat-Polyadditionsprodukte bevorzugt an ASA und/oder ASA/PC.

An die thermoplastische Folie schließt sich haftend das Polyisocyanat-Polyadditionsprodukt, beispielsweise das Polyurethan und/oder Polyisocyanurat als Produkt (ii) der erfindungsgemäßen Umsetzung der Reaktionsmischung enthaltend (a), (b), (c), (d), (e) und gegebenenfalls (f) und/oder (g) an.

Als Isocyanate (a) können allgemein bekannte (cyclo)aliphatische und/oder insbesondere aromatische Polyisocyanate eingesetzt werden. Zur Herstellung der erfindungsgemäßen Verbundelemente eignen sich besonders aromatische Diisocyanate, vorzugsweise Diphenylmethandiisocyanat (MDI) und Toluylendiisocyanat (TDI). Die Isocyanate können in Form der reinen Verbindung oder in modifizierter Form, beispielsweise in Form von Urethdionen, Isocyanuraten, Allophanaten oder Biurethen, vorzugsweise in Form von Urethanund Isocyanatgruppen enthaltenden Umsetzungsprodukten, sogenannten Isocyanat-Prepolymeren, eingesetzt werden.

Als gegenüber Isocyanaten reaktive Verbindungen (b) werden erfindungsgemäß Polyetherpolyalkohol mit einer Funktionalität von 1,9 bis 8,0, einer Hydroxylzahl von 250 bis 1000 mg KOH/g sowie 10 bis 100 % primären Hydroxylgruppen eingesetzt. Derartige Polyetherpolyole sind allgemein bekannt, kommerziell erhältlich und basieren beispielsweise auf üblichen Starterverbindungen, die mit üblichen Alkylenoxiden, beispielsweise Propylenoxid und/oder Ethylenoxid unter allgemein bekannten Bedingungen umgesetzt werden. Der Gehalt an primären Hydroxylgruppen kann erreicht werden, indem man die Polyole zum Abschluß mit Ethylenoxid umsetzt. Diese erfindungsgemäßen Verbindungen (b) können gegebenenfalls in Mischung mit weiteren bekannten gegenüber Isocyanaten reaktiven Verbindungen, beispielsweise üblichen Polyolen mit einer Funktionalität von 1,9 bis 6,0, insbesondere 1,9 bis 4,0 eingesetzt werden, die sich von den erfindungsgemäßen Verbindungen (b) in der Hydroxylzahl unterscheiden oder aber auf Polycarbonatdiolen und/oder Polyesterolen basieren. Des weiteren können die erfindungsgemäßen Verbindungen (b) in Mischung mit Kettenverlängerungs- und/oder Vernetzungsmitteln verwendet werden. Bei den Kettenverlängerungsmitteln handelt es sich überwiegend um 2-funktionelle Alkohole mit Molekulargewichten von 60 bis 499, beispielsweise Ethylenglykol, Propylenglykol, Butandiol-1,4, Pentandiol-1,5. Bei den Vernetzungsmitteln handelt es sich um Verbindungen mit Molekulargewichten von 60 bis 499 und 3 oder mehr aktiven H-Atomen, vorzugsweise Aminen und besonders bevorzugt Alkoholen, beispielsweise Glyzerin, Trimethylolpropan und/oder Pentaerythrit.

Als (c) können allgemein bekannte anorganische und/oder organische Säuren eingesetzt werden, insbesondere solche, die geeignet sind, basische Katalysatoren, beispielsweise Amine, insbesondere tertiäre Amine, nach der Umsetzung zu den Polyisocyanat-Polyadditionsprodukten zu blockieren. In Fragen kommen beispielsweise Phosphorsäure und/oder wässrige Polyacrylsäure. Bevorzugt wird Phosphorsäure, Essigsäure und/oder wässrige Polyacrylsäure eingesetzt. Die Komponente (c) wird erfindungsgemäß bevorzugt in einem Anteil von 0,05 bis 0,4 Gew.-%, bevorzugt 0,05 bis 0,2 Gew.-%, bezogen auf das Gesamtgewicht der Reaktionsmischung, eingesetzt.

Die Fasern (d) führen erfindungsgemäß zu einer Verstärkung des Verbundelementes und damit zu einer Verbesserung seiner mechanischen Eigenschaften. Als Fasern (d) können übliche für diesen Zweck bekannte Fasern eingesetzt werden, beispielsweise Endlosglasmatten oder Naturfasermatten, Glasfaserrovings oder Naturfaserrovings. Bevorzugt setzt man Glasfasern ein. Die Fasern, insbesondere die Glasfasern, weisen bevorzugt eine Länge von 12,5 bis 100 mm auf. Die Fasern können gegebenenfalls in Form von üblichen Matten oder Geweben eingesetzt werden. Die Glasfasern weisen besonders bevorzugt eine Länge von 12,5, 25, 50, 75 oder 100 mm oder eine definierte Kombination der genannten Faserlängen auf. Die Fasern verfügen bevorzugt über 4800 TEX (4800 Gramm/Kilometerfaser) und eine PUR freundlichen Schlichte. Bevorzugt wurde mit einer Glasfaseraustragsleistung von 25 bis 70 g/s gearbeitet.

Als Katalysatoren (e) können übliche Verbindungen eingesetzt werden, die beispielsweise die Reaktion der Komponente (a) mit der Komponente (b) stark beschleunigen. In Frage kommen beispielsweise tertiäre Amine und/oder organische Metallverbindungen, insbesondere Zinnverbindungen. Bevorzugt werden als Katalysatoren solche eingesetzt, die zu einem möglichst geringen Fogging, d.h. zu einer möglichst geringen Abgabe von flüchtigen Verbindungen aus dem Umsetzungsprodukt (ii) führen, beispielsweise tertiäre Amine mit reaktiven Endgruppen und/oder höhersiedende Aminkatalysen. Beispielsweise können als Katalysatoren folgende Verbindungen eingesetzt werden: Triethylendiamin, Aminoalkyl- und/oder Aminophenyl-imidazole, z.B. 4-Chlor-2,5-dimethyl-1-(N-methylaminoethyl)-imidazol, 2-Aminopropyl-4,5-dimethoxy-1-methylimidazol, 1-Aminopropyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol, Zinn-(II)salze von organischen Carbonsäuren, z.B. Zinn-(II)-diacetat, Zinn-(II)-dioctoat, Zinn-(II)-diethylhexoat und Zinn-(II)-dilaurat und Dialkylzinn-(IV)-salzen von organischen Carbonsäuren, z.B. Dibutyl-zinndiacetat, Dibutylzinn-dilaurat, Dibutylzinn-maleat und Dioctylzinn-diacetat.

Als Treibmittel können zur Herstellung von geschäumten Produkten (ii) allgemein bekannte chemisch oder physikalisch wirkende Verbindungen eingesetzt werden. Als physikalisch wirkendes Treibmittel kann bevorzugt Wasser eingesetzt werden, welches durch Reaktion mit den Isocyanatgruppen Kohlendioxid bildet. Beispiele für physikalische Treibmittel, d.h. solche, inerte Verbindungen, die unter den Bedingungen der Polyurethanbildung verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Die Menge der eingesetzten Treibmittel richtet sich nach der angestrebten Dichte der Schaumstoffe. Die unterschiedlichen Treibmittel können einzeln oder in beliebigen Mischungen untereinander zum Einsatz kommen. Besonders bevorzugt wird nur Wasser als Treibmittel eingesetzt. Physikalische Treibmittel werden bevorzugt in einer Menge von <0,5 Gew.-%, bezogen auf das Gewicht der Komponente (b), eingesetzt.

Die Umsetzung erfolgt gegebenenfalls in Anwesenheit von (g) Hilfs- und/oder Zusatzstoffen, wie z.B. Füllstoffen, Zellreglern, oberflächenaktiven Verbindungen und/oder Stabilisatoren gegen Oxidativen, thermischen oder mikrobiellen Abbau oder Alterung.

Die erfindungsgemäßen Verbundelemente weisen bevorzugt eine Dichte zwischen 500 und 1000 kg/m³, eine Zugfestigkeit nach DIN EN 61 von 15 bis 21 N/mm², ein Zug E-Modul nach DIN EN 61 von 1500 bis 2000 N/mm², eine Schlagzähigkeit nach DIN 53453 von 14 bis 45 kJ/m², ein Biege E-Modul nach DIN EN 63 von 1400 bis 1600 N/mm² und/oder eine Biegefestigkeit nach DIN EN 63 von 38 bis 48 N/mm² auf.

Die Herstellung der erfindungsgemäßen Verbundelementen enthaltend eine (i) thermoplastische Folie und daran haftend Polyisocyanat-Polyadditionsprodukte erfolgt derart, daß man
a) Isocyanat,
b) Polyetherpolyalkohol mit einer Funktionalität von 1,9 bis 8,0, einer Hydroxylzahl von 250 bis 1800 sowie 10 bis 100 % primären Hydroxylgruppen,
c) mindestens einer organischen und/oder anorganischen Säure, bevorzugt 0,05 bis 0,4 Gew.-% mindestens einer organischen und/oder anorganischen Säure, bezogen auf das Gesamtgewicht der Reaktionsmischung,
d) Fasern,
e) Katalysatoren und gegebenenfalls
f) Treibmittel und/oder
g) Hilfs und/oder Zusatzstoffe
in Gegenwart von (i) umsetzt.

Zur Herstellung der erfindungsgemäßen Produkte können die Isocyanate (a) und die gegenüber Isocyanaten reaktiven Verbindungen (b) in solchen Mengen zur Umsetzung gebracht, daß das Äquivalenzverhältnis von NCO-Gruppen von (a) zur Summe der reaktiven Wasserstoffatome von (b) bevorzugt 0,95 bis 1,3:1, besonders bevorzugt 1 bis 1,2:1 und insbesondere 1 bis 1,15:1, beträgt. Falls das Produkt (ii) zumindest teilweise Isocyanuratgruppen gebunden enthalten, wird üblicherweise ein Verhältnis von NCO-Gruppen zur Summe der reaktiven Wasserstoffatome von 1,5 bis 60:1, vorzugsweise 1,5 bis 8:1, angewandt.

Die Produkte werden üblicherweise nach dem bekannten one-shot oder dem ebenfalls bekannten Prepolymerverfahren hergestellt.

Bei dem bekannten Prepolymerverfahren wird in einem ersten Schritt üblicherweise aus (a) und im Unterschuß (b) ein Isocyanatgruppen-aufweisendes Prepolymer hergestellt, das anschließend mit weiterem (b) zu den gewünschten Produkten umgesetzt wird.

Die Umsetzung zum Produkt kann beispielsweise durch Handguß, durch Hochdruck- oder Niederdruckmaschinen, oder durch RIM-Verfahren (reaction-injection-molding) bevorzugt in offenen Formwerkzeugen durchgeführt werden. Geeignete PU-Verarbeitungsmaschinen sind handelsüblich erhältlich (z.B. Fa. Elastogran, Isotherm, Hennecke, Kraus Maffai u.a.). Bevorzugt werden LFI-Anlage der Fa. Krauss Maffei oder Puromaten der Fa. Elastogran eingesetzt.

Die PUR-Dosieranlagen können bevorzugt folgende Parameter einhalten:
Austragsleistung Polyolkomponente: 40-55 g/s
Austragsleistung Isocyanat: 80-120g/s
Temperatur der Polyolkomponente am Mischkopf: 23 - 30 °C
Temperatur der Isocyanatkomponente am Mischkopf: 23 - 30°C
Komponentendrücke im Hochdruckkreislauf:
Isocyanat: 90 bis 120 bar
Polyol: 140 bis 220 bar
Komponentenvordruck in den Vorratsbehältern: 1,5 bis 4,5 bar.

Bei der Verarbeitung mit Polyurethan(PU)-Maschinen ist es auch vorteilhaft, wenn während der Verarbeitung die Vorlagebehälter unter vermindertem Druck stehen.

Die Ausgangskomponenten werden üblicherweise in Abhängigkeit vom Anwendungsfall bei einer Temperatur von 20 bis 36°C, vorzugsweise von 20 bis 24°C, gemischt und beispielsweise in das Formwerkzeug eingebracht. Die Vermischung kann, wie bereits dargelegt wurde, mechanisch mittels eines Rührers oder einer Rührschnecke durchgeführt werden, oder kann in einem üblichen Hochdruckmischkopf erfolgen.

Die Umsetzung des Reaktionsgemisches kann beispielsweise in üblichen, bevorzugt temperierbaren und verschließbaren, Form durchgeführt werden. Insbesondere bei der Herstellung von möglichst glatten Produkten werden als Formwerkzeuge bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche dieser Form kann beispielsweise durch Polieren behandelt werden.

Als Formwerkzeuge zur Herstellung der Produkte können übliche und kommerziell erhältliche Werkzeuge eingesetzt werden, deren Oberfläche beispielsweise aus Stahl, Aluminium, Emaille, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar, um die bevorzugten Temperaturen einstellen zu können, verschließbar und bevorzugt zur Ausübung eines Druckes auf das Produkt ausgerüstet sein.

Die Umsetzung zu den Polyisocyanat-Polyadditionsprodukten erfolgt üblicherweise bei einer Formtemperatur von 30 bis 65°C und einer Temperatur der Ausgangskomponenten von bevorzugt 18 bis 35 besonders bevorzugt 20 bis 28°C, für eine Dauer von üblicherweise 2,5 bis 7 min, bevorzugt 3 bis 5 min.

Die Umsetzung im Formwerkzeug erfolgt erfindungsgemäß in direktem Kontakt mit der thermoplastischen Folie (i). Dies kann beispielsweise dadurch erreicht werden, daß man (i) vor der Umsetzung bevorzugt frei von Falten in der Form plaziert und anschließend wie bereits beschrieben die Reaktionsmischung auf die Folie (i) füllt und anschließend bevorzugt die Form verschließt. Die Fasern (d) können sowohl enthaltend in dem Reaktionsgemisch eingesetzt werden, als auch in Form von Matten oder Geweben. Werden Matten oder Gewebe als (d) eingesetzt, so können diese beispielsweise vor dem Einfüllen des Reaktionsmischung in die Form auf der Folie (i) plaziert werden und anschließend das Reaktionsgemisch, das in diesem Verfahren keine Fasern (d) zusätzlich zu den Matten oder Geweben enthaltend muß, in die Form eingefüllt werden.

Die thermoplastische Folie kann bevorzugt vor dem Einlegen in das Werkzeug beflammt werden, wobei insbesondere die Seite der Folie beflammt wird, die mit (ii) in Kontakt tritt. Die Beflammung kann derart erfolgen, daß man mit einem Brenner beispielsweise mit rauschender, reduzierender blauer Flamme (Propangas,ca. 1300°C) in gleichmäßiger Geschwindigkeit die tiefgezogene Folie beflammt, wobei ein Entzünden der Folie vermieden wird. Dieses bevorzugte Beflammen von (i) bewirkt zusätzlich eine deutliche Verbesserung der Haftung zwischen (i) und (ii).

Die erfindungsgemäß erhältlichen Produkte weisen entsprechend ihrem bevorzugten Einsatz als flächige Formteile, beispielsweise als Ersatz für metallische Bleche, bevorzugt eine flächige Struktur auf. Die Produkte besitzen bevorzugt eine Dicke von 5 bis 10 mm.

Die Produkte können nach der Herstellung bevorzugt auf der Oberfläche der thermoplastischen Folie gefärbt werden, beispielsweise für Auftragen von Farbe, z.B. durch übliche Lackierverfahren. Die bevorzugt gefärbten Produkte finden vorzugsweise Verwendung als Bauteile im Fahrzeug-, Flugzeug- oder Immobilienbau, bevorzugt als Karosseriebauteile für Kraftfahrzeuge, insbesondere als Dächer, Türen, Motorhauben, Kofferraumdeckel und Stoßstangen, beispielsweise in Kraftfahrzeugen.

Diese erfindungsgemäßen Produkte weisen folgende Vorteile auf:
- Erhöhte mechanische Stabilität aufgrund der intensiven Verbindung der Polyisocyanat-Polyadditionsprodukte mit und in den Fasern;
- intensive Verbindung zwischen der thermoplastischen Folie (i) und dem Polyisocyanat-Polyadditionsprodukt (ii), die auch nach einer längeren Belastung unter hohen und niederen Temperaturen bei hoher Luftfeuchtigkeit stabil ist;
- verbesserte Reaktionskinetik bei der Herstellung.

Die Erfindung wird in dem nachfolgenden Ausführungsbeispiel näher erläutert.

Als Außenbeschichtung wurde eine durchgefärbte, zweischichtige, koextrodierte, thermoplastische Folien eingesetzt, deren Kratzfestigkeit und Chemikalienbeständigkeit über eine PMMA Deckschicht erzielt wurde. Die Farbgebung und UV-Beständigkeit wurde durch die zweite Schicht aus ASA/PC erlangt. Um das gewünschte Design der Folie zu erreichen, wurde diese tiefgezogen.

Die tiefgezogene Folie wurde vor dem Einlegen in das Schäumwerkzeug beflammt, indem man in einem Beflammungsautomaten mit einem Mehrflammen-Brenner mit rauschender, reduzierender blauer Flamme (Propangas, ca. 1300°C) in gleichmäßiger Geschwindigkeit die tiefgezogene Folie beflammt. Die Beflammung der Folie beschränkte sich auf die zu hinterschäumende Seite.

Anschließend wurde die beflammte, tiefgezogene Folie zur Weiterverarbeitung in das geöffnete Werkzeug im Werkzeugunterteil der LFI-Anlage eingelegt, wobei das Werkzeugunterteil auf ca. 36 bis 45°C beheizt war.

Nach dem Einlegen der tiefgezogenen Folie wurde das Werkzeugunterteil in Schäumposition gebracht, das Werkzeugoberteil eingetrennt, am Werkzeugoberteil das Dekor passgenau eingelegt und angesaugt. Dabei klemmte ein Spannrahmen das Dekor fest. Anschließend wurde die Ansaugung des Dekors abgeschaltet.

Die Temperierung des Werkzeugoberteils betrug zwischen 40 und 65°C.

Der Eintrag der mit PUR benetzten Glasfasern oder Naturfasern erfolgte in programmierten Bahnkurven durch einen Roboter mit dem LFI-Mischkopf und dem dazugehörigen Faserschneidwerk.

Als PUR-System wurde Elastoflex® E 3509 (Elastogran GmbH) eingesetzt, das 10 bis 40 Gew. % Glasfasern enthielt.

Die Eintragszeit betrug zwischen 20 und 30 s.

Nach Beendigung des Eintrag der PUR benetzten Glasfaser wurde das Werkzeug für eine Zeit von 100 bis 210 s geschlossen.

Nach Ablauf der Reaktionszeit wurde das Werkzeug geöffnet und das hergestellte Bauteil entformt.

Als Besonderheit ist bei dem verwendetem Schaumsystem die lange Startzeit von 20 bis 28 s und die kurze Steigzeit von 60 bis 75 s zu nennen. Daraus resultiert, daß eine Eintragszeit der Glasfaser- PUR Matrix von ca. 25 s möglich ist und die Formschließzeit, also die Ausreaktion des Schaumes, nur ca. 180-210 s beträgt. Möglich war das nur durch die Wahl der erfindungsgemäßen Ausgangsstoffe.

Der niedrige Längenausdehnungskoeffizient von kleiner 20 x 10⁻⁶ 1/k des PUR Systems machte es zudem möglich, ein Bauteil aus thermoplastischer Folie und duroplastischen PUR herzustellen, daß eine niedrige Längenänderung besitzt und somit ein niedriges Spaltmaß zwischen der Karosserie und dem Bauteil zuläßt.

Der Glaspunkt des PUR Systems von ca. 150°C und die Glasfasermenge und Glasfaserlänge ergaben ein Bauteil mit hoher Wärmestabilität.

Die mechanischen Eigenschaften des Verbundelementes (thermoplastische Folie, PUR, Glasfaser, Dekor) sind wie folgt:

| **Prüfung** | **Parameter** | **Ergebnis** | **Prüfvor- schrift** | **Probekörper** | **Prüfge- schwindigkeit** |
|---|---|---|---|---|---|
| | Dichte vorne (d = 5,1 mm) | 960 g/l | DIN 53420 | | |
| **Raumgewicht** | Mitte (d = 8,3 mm) | 600 g/l | Item | | |
| | hinten (d = 5,0 mm) | 990 g/l | Item | | |
| **Zugversuch** | Zugfestigkeit | 15 - 21 N/mm² | DIN EN 61 | Streifenprobe Typ II | 5 mm/min |
| | Zug E-Modul | 1500 -2000 N/mm² | Item | item | 100 mm/min |
| **Schlagver- such** | Schlagzähigkeit vorne | 15 - 38 kJ/m² | DIN 53 453 | 50 x 6 x 5 mm | NN |
| | Mitte | 20 - 45 kJ/m² | Item | 50 x 6 x 8 mm | NN |
| | hinten | 14 - 32 kJ/m² | Item | 50 x 6 x 8 mm | NN |
| **Biegefestig- keit** | Biege E-Modul | 1400 -1600 N/mm² | DIN EN 63 | 120x15x 8 mm | 10 mm/min |
| | Biegefestigkeit | 38 - 48 N/mm² | Item | item | item |

## Patentansprüche

1. Verbundelemente enthaltend
i) thermoplastische Folie, an die sich haftend
ii) das Produkt der Umsetzung einer Reaktionsmischung enthaltend
a) Isocyanat,
b) Polyetherpolyalkohol mit einer Funktionalität von 1,9 bis 8,0, einer Hydroxylzahl von 250 bis 1800 mg KOH/g sowie 10 bis 100 % primären Hydroxylgruppen,
c) mindestens eine organische und/oder anorganische Säure,
d) Fasern,
e) Katalysatoren und gegebenenfalls
f) Treibmittel und/oder
g) Hilfs und/oder Zusatzstoffe
anschließt.

2. Verbundelemente gemäß Anspruch 1 enthaltend als thermoplastische Folie (i) eine mindestens zwei Schichten enthaltene Folie, wobei die eine Schicht einen ASA und/oder Polycarbonat-Werkstoff enthält.

3. Verbundelement nach Anspruch 1, **dadurch gekennzeichnet, daß** als Fasern (f) Glasfasern mit einer Länge von 12,5 bis 100 mm enthalten sind.

4. Verbundelement nach Anspruch 1 mit einer Dichte zwischen 500 und 1000 kg/m³, einer Zugfestigkeit nach DIN EN 61 von 15 bis 21 N/mm², einem Zug E-Modul nach DIN EN 61 von 1500 bis 2000 N/mm², einer Schlagzähigkeit nach DIN 53453 von 14 bis 45 kJ/m², einem Biege E-Modul nach DIN EN 63 von 1400 bis 1600 N/mm² und/oder einer Biegefestigkeit nach DIN EN 63 von 38 bis 48 N/mm².

5. Verfahren zur Herstellung von Verbundelementen enthaltend eine (i) thermoplastische Folie und daran haftend Polyisocyanat-Polyadditionsprodukte, **dadurch gekennzeichnet, daß** man
a) Isocyanat,
b) Polyetherpolyalkohol mit einer Funktionalität von 1,9 bis 8, einer Hydroxylzahl von 250 bis 1800 sowie 10 bis 100 % primären Hydroxylgruppen,
c) mindestens eine organische und/oder anorganische Säure,
d) Fasern,
e) Katalysatoren und gegebenenfalls
f) Treibmittel und/oder
g) Hilfs- und/oder Zusatzstoffe
in Gegenwart von (i) umsetzt.

6. Verfahren nach Anspruch 5, **dadurch gekennzeichnet, daß** man (i) vor der Umsetzung von (a), (b), (c), (d), (e) und gegebenenfalls (f) und/oder (g) im Gegenwart von (i) beflammt.

7. Verwendung von Verbundelementen gemäß einem der Ansprüche 1 bis 4 als Bauteile im Fahrzeug-, Flugzeug- oder Immobilienbau.

8. Verwendung von Verbundelementen gemäß einem der Ansprüche 1 bis 4 als Karosseriebauteile für Kraftfahrzeuge.

9. Dächer, Türen, Motorhauben, Kofferraumdeckel und Stoßstangen enthaltend Verbundelemente nach einem der Ansprüche 1 bis 4.

## Claims

1. A composite element comprising
i) thermoplastic film, adhering to which is
ii) the product of reacting a reaction mixture comprising
a) isocyanate,
b) polyether polyalcohol with a functionality of from 1.9 to 8.0 and a hydroxyl number of from 250 to 1800 mg KOH/g and from 10 to 100% of primary hydroxyl groups,
c) at least one organic and/or inorganic acid,
d) fibers,
e) catalysts, and, if desired,
f) blowing agents and/or
g) auxiliaries and/or additives.

2. A composite element as claimed in claim 1 in which the thermoplastic film (i) is a film comprising at least two layers, where one of the layers comprises an ASA and/or a polycarbonate material.

3. A composite element as claimed in claim 1, wherein the fibers (f) present comprise glass fibers with a length of from 12.5 to 100 mm.

4. A composite element as claimed in claim 1 with a density of from 500 to 1000 kg/m³, a tensile strength to DIN EN 61 of from 15 to 21 N/mm², a tensile modulus of elasticity to DIN EN 61 of from 1500 to 2000 N/mm², an impact strength to DIN 53453 of from 14 to 45 kJ/m², a flexural modulus of elasticity to DIN EN 63 of from 1400 to 1600 N/mm² and/or a flexural strength to DIN EN 63 of from 38 to 48 N/mm².

5. A process for producing composite elements comprising (i) a thermoplastic film, and, adhering thereto, polyisocyanate polyaddition products, which comprises reacting
a) isocyanate,
b) polyether polyalcohol with a functionality of from 1.9 to 8.0 and a hydroxyl number of from 250 to 1800 and from 10 to 100% of primary hydroxyl groups,
c) at least one organic and/or inorganic acid,
d) fibers,
e) catalysts, and, if desired,
f) blowing agents and/or
g) auxiliaries and/or additives
in the presence of (i).

6. A process as claimed in claim 5, wherein (i) is flame-treated prior to the reaction of (a), (b), (c), (d), (e) and, if desired, (f) and/or (g) in the presence of (i).

7. The use of composite elements as claimed in any one of claims 1 to 4 as components in the construction of motor vehicles, aircraft or buildings.

8. The use of composite elements as claimed in any one of claims 1 to 4 as bodywork components for motor vehicles.

9. A roof, a door, a hood, a trunk lid or a bumper comprising composite elements as claimed in any one of claims 1 to 4.

## Revendications

1. Elément composite contenant
i) une feuille thermoplastique sur laquelle adhère
ii) le produit provenant de la transformation d'un mélange réactionnel contenant
a) un isocyanate
b) un polyétherpolyalcool présentant une fonctionnalité de 1,9 à 8,0, un indice hydroxyle de 250 à 1800 mg de KOH/g ainsi que 10 à 100 % de groupes hydroxyle primaires,
c) au moins un acide organique et/ou inorganique,
d) des fibres
e) des catalyseurs et, le cas échéant,
f) des agents moussants et/ou
g) des adjuvants et/ou des additifs.

2. Elément composite selon la revendication 1 contenant comme feuille thermoplastique (i) une feuille contenant au moins deux couches, une couche contenant un matériau ASA et/ou polycarbonate.

3. Elément composite selon la revendication 1, **caractérisé en ce que** les fibres (f) contenues sont des fibres de verre présentant une longueur de 12,5 à 100 mm:

4. Elément composite selon la revendication 1 présentant une densité entre 500 et 1000 kg/m³, une résistance à la traction selon la norme DIN EN 61 de 15 à 21 N/mm², un module E de traction selon la norme DIN EN 61 de 1500 à 2000 N/mm², une résilience selon la norme DIN 53453 de 14 à 45 kJ/m², un module E de flexion selon la norme DIN EN 63 de 1400 à 1600 N/mm² et/ou une résistance à la flexion selon la norme DIN EN 63 de 38 à 48 N/mm².

5. Procédé pour la fabrication d'éléments composites contenant (i) une feuille thermoplastique et des produits de polyaddition polyisocyanates qui y adhèrent, **caractérisé en ce qu'**on transforme
a) un isocyanate
b) un polyétherpolyalcool présentant une fonctionnalité de 1,9 à 8,0, un indice hydroxyle de 250 à 1800 mg de KOH/g ainsi que 10 à 100 % de groupes hydroxyle primaires,
c) au moins un acide organique et/ou inorganique,
d) des fibres
e) des catalyseurs et le cas échéant,
f) des agents moussants et/ou
g) des adjuvants et/ou des additifs
en présence de (i).

6. Procédé selon la revendication 5, **caractérisé en ce qu'**on flambe (i) avant la transformation de (a), (b), (c), (d), (e) et le cas échéant (f) et/ou (g) en présence de (i).

7. Utilisation d'éléments composites selon l'une quelconque des revendications 1 à 4 comme éléments de construction dans la construction de véhicules, d'avions ou immobilière.

8. Utilisation d'éléments composites selon l'une quelconque des revendications 1 à 4 comme éléments de carrosserie pour des véhicules.

9. Toits, portes, capots de moteur, couvercles de coffre et pare-chocs contenant des éléments composites selon l'une quelconque des revendications 1 à 4.
